(19) Europäisches Patentamt
European Patent Office
Office européen des brevets

(11) **EP 4 651 298 A1**

(12) **EUROPEAN PATENT APPLICATION**
published in accordance with Art. 153(4) EPC

(43) Date of publication:
**19.11.2025  Bulletin 2025/47**

(21) Application number: 23921754.0

(22) Date of filing: **15.02.2023**

(51) International Patent Classification (IPC):
*H01P 5/08* (2006.01)    *H01Q 1/32* (2006.01)
*H01Q 21/06* (2006.01)    *G01S 13/931* (2020.01)
*H01P 3/12* (2006.01)

(52) Cooperative Patent Classification (CPC):
G01S 13/931; H01P 3/12; H01P 5/08; H01Q 1/32;
H01Q 21/06

(86) International application number:
**PCT/CN2023/076197**

(87) International publication number:
**WO 2024/168590 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
• WU, Zhongjie
  Shenzhen, Guangdong 518129 (CN)
• LI, Haowei
  Shenzhen, Guangdong 518129 (CN)
• GAO, Xiang
  Shenzhen, Guangdong 518129 (CN)
• YANG, Xiaopan
  Shenzhen, Guangdong 518129 (CN)

(74) Representative: **Gill Jennings & Every LLP
The Broadgate Tower
20 Primrose Street
London EC2A 2ES (GB)**

(54) **WAVEGUIDE APPARATUS AND RELATED PRODUCT**

(57)    A waveguide apparatus and a related product are provided, and relate to the field of millimeter-wave radar technologies. The waveguide apparatus includes N radiation ports, a resonant cavity, a coupling cavity, and a feed-in structure, where N is an integer greater than or equal to 1. The feed-in structure is configured to feed a signal. The coupling cavity is configured to couple the signal to the resonant cavity. The resonant cavity is configured to radiate the signal over the N radiation ports in a first direction. The coupling cavity is located between the resonant cavity and the feed-in structure. The coupling cavity is connected to the resonant cavity in a second direction, and the first direction is perpendicular to the second direction. In the waveguide apparatus, a signal can be coupled at a same layer in a transmission process by using the coupling cavity, to reduce a cross-sectional height of a waveguide antenna, thereby reducing complexity of a three-dimensional structure of the waveguide antenna, lowering a requirement on processing precision, and reducing processing costs.

FIG. 4

## Description

### TECHNICAL FIELD

This application relates to the field of millimeter-wave radar technologies, and in particular, to a waveguide apparatus and a related product.

### BACKGROUND

A waveguide (waveguide) is a structure used to guide an electromagnetic wave in a directional manner. The waveguide is mainly used as a microwave frequency transmission line, to connect a microwave transmitter and a microwave receiver to antennas of the microwave transmitter and the microwave receiver in a microwave radio link device like a radar.

Compared with a conventional printed circuit board (printed circuit board, PCB) printed antenna, a waveguide antenna has great advantages in radiation efficiency. In a current radar implementation, a multi-stage power divider in a vertical direction is used to implement a feed network of the waveguide antenna. However, the feed network of the waveguide antenna has a complex three-dimensional structure, poses a high requirement on processing precision, and is subject to high processing costs. As a result, the waveguide antenna is not practical in engineering.

### SUMMARY

Embodiments of this application provide a waveguide apparatus and a related product, to reduce complexity of a three-dimensional structure of a waveguide antenna, lower a requirement on processing precision, and reduce processing costs.

According to a first aspect, an embodiment of this application provides a waveguide apparatus, and the waveguide apparatus includes:

N radiation ports, a resonant cavity, a coupling cavity, and a feed-in structure, where N is an integer greater than or equal to 1;
the feed-in structure is configured to feed a signal;
the coupling cavity is configured to couple the signal to the resonant cavity;
the resonant cavity is configured to radiate the signal over the N radiation ports in a first direction;
the coupling cavity is located between the resonant cavity and the feed-in structure; and
the coupling cavity is connected to the resonant cavity in a second direction, and the first direction is perpendicular to the second direction.

In embodiments of this application, the coupling cavity is connected to the resonant cavity in the waveguide apparatus in the second direction, the resonant cavity radiates the signal over the N radiation ports in the first direction, and the first direction is perpendicular to the second direction. In this way, the signal can be coupled at a same layer in a transmission process (that is, the signal is fed from the feed-in structure, sequentially passes through the coupling cavity and the resonant cavity, and is radiated over the N radiation ports) by using the coupling cavity.

However, currently, a feed network of a waveguide antenna is implemented by using a multi-stage power divider in a vertical direction. As a result, a signal is coupled at a plurality of layers in a transmission process. Consequently, a cross-sectional height of the waveguide antenna is large, a three-dimensional structure is complex, a requirement on processing precision is high, and processing costs are high.

Compared with the current feed network of the waveguide antenna that is implemented by using the multi-stage power divider in the vertical direction, in this embodiment of this application, a signal can be coupled at a same layer in a transmission process by using the coupling cavity, to reduce a cross-sectional height of the waveguide antenna, thereby reducing complexity of a three-dimensional structure of the waveguide antenna, lowering a requirement on processing precision, and reducing processing costs.

In a possible implementation, the coupling cavity is connected to the feed-in structure in a third direction, and the third direction is perpendicular to both the first direction and the second direction.

In an implementation of this application, a possible specific implementation of a connection between the coupling cavity and the feed-in structure is provided. Specifically, the coupling cavity is connected to the feed-in structure in the third direction, and the third direction is perpendicular to both the first direction and the second direction. It may be understood that the first direction, the second direction, and the third direction are mutually perpendicular to form three-dimensional space. According to embodiments of this application, a signal can be coupled at a same layer in a transmission process in which the signal is fed from the feed-in structure, sequentially passes through the coupling cavity and the resonant cavity, and then is radiated over the N radiation ports, thereby reducing the cross-sectional height of the waveguide antenna.

In a possible implementation, the coupling cavity includes a first cavity and a second cavity that are communicated, the first cavity is connected to the resonant cavity in the second direction, and the second cavity is connected to the feed-in structure in the third direction.

In an implementation of this application, a possible specific implementation of the coupling cavity is provided. Specifically, the first cavity in the coupling cavity is connected to the resonant cavity in the second direction, the second cavity in the coupling cavity is connected to the feed-in structure in the third direction, the first cavity and the second cavity are communicated, and the second direction and the third direction are perpendicular to each other, so that a signal is coupled at a same layer in a transmission process in which the signal is fed from the feed-in structure, sequentially passes through the second cavity in the coupling cavity, the first cavity in the coupling cavity, and the resonant cavity, and is radiated over the N radiation ports, thereby reducing the cross-sectional height of the waveguide antenna.

In a possible implementation, value ranges of cross-sectional side lengths a1 and b1 of the first cavity in the second direction meet the following condition:

$$0.3\lambda \leq b1 \leq 0.8\lambda, \text{ and } 0 < a1 \leq 1/2 \times b1,$$

where

$\lambda$ represents a wavelength of an electromagnetic wave whose frequency is less than a first threshold.

In the implementation of this application, the cross-sectional side lengths a1 and b1 of the first cavity in the second direction meet the foregoing condition, so that impedance matching conversion can be implemented, and transmission efficiency of a signal in the coupling cavity is improved.

It may be understood that the first threshold in embodiments of this application is not a fixed value, and may be adjusted based on different application scenarios. For example, the waveguide apparatus in embodiments of this application may be used in a millimeter wave of 76 GHz to 81 GHz. In this case, the first threshold may be adjusted, so that $\lambda$ represents a wavelength of the millimeter wave of 76 GHz to 81 GHz.

In a possible implementation, a1 and b1 are perpendicular to each other.

In the implementation of this application, the cross-sectional side lengths a1 and b1 of the first cavity in the second direction are perpendicular to each other. It may be understood that a cross section of the first cavity in the second direction is a rectangle.

In a possible implementation, a length L1 of the first cavity in the second direction meets the following condition:

$$0.1\lambda \leq L1 \leq 0.4\lambda,$$

where

$\lambda$ represents the wavelength of the electromagnetic wave whose frequency is less than the first threshold.

In the implementation of this application, the length L1 of the first cavity in the second direction meets the foregoing condition, so that impedance matching conversion can be implemented, and transmission efficiency of a signal in the coupling cavity is improved.

In a possible implementation, an end at which the first cavity is connected to the resonant cavity is located at a central position of the resonant cavity in the third direction.

In the implementation of this application, the end at which the first cavity is connected to the resonant cavity is located at the central position of the resonant cavity in the third direction, so that a signal in the first cavity is radiated over the N radiation ports through the resonant cavity, thereby improving signal radiation efficiency.

In a possible implementation, an end at which the first cavity is connected to the second cavity is located at any position between a bottom and a top of the second cavity in the first direction.

In the implementation of this application, the end at which the first cavity is connected to the second cavity is located at any position between the bottom and the top of the second cavity in the first direction. In this way, an electric field can rotate in a vertical plane, so that a signal fed from the feed-in structure can be coupled at a same layer and transmitted to the resonant cavity through the coupling cavity, thereby reducing the cross-sectional height of the waveguide antenna.

In a possible implementation, value ranges of cross-sectional side lengths a2 and b2 of the resonant cavity in the third direction meet the following condition:

$$0.6\lambda \leq b2 \leq \lambda, \text{ and } 0.35 \times b2 < a2 \leq 0.5 \times b2,$$

where

$\lambda$ represents the wavelength of the electromagnetic wave whose frequency is less than the first threshold.

In the implementation of this application, the cross-sectional sizes a2 and b2 of the resonant cavity in the third direction meet the foregoing condition, so that steady-state field distribution in the resonant cavity can be implemented, and transmission efficiency of a signal in the resonant cavity can be improved.

In a possible implementation, a2 and b2 are perpendicular to each other.

In the implementation of this application, the cross-sectional side lengths a2 and b2 of the resonant cavity in the third direction are perpendicular to each other. It may be understood that a cross section of the resonant cavity in the third direction is a rectangle.

In a possible implementation, a length L2 of the resonant cavity in the third direction meets the following condition:

$$0.85 \times \left( N \times \lambda_g/2 \right) \leq L2 \leq 1.15 \times \left( N \times \lambda_g/2 \right),$$

where

$\lambda_g$ represents a wavelength of an electromagnetic wave transmitted in the resonant cavity.

In the implementation of this application, the length L2 of the resonant cavity in the third direction meets the foregoing condition, so that steady-state field distribution in the resonant cavity can be implemented, and transmission efficiency of a signal in the resonant cavity can be improved.

In a possible implementation, a spacing s between two adjacent radiation ports in the N radiation ports meets the following condition:

$$0.3\lambda \leq s \leq \lambda,$$

where

$\lambda$ represents the wavelength of the electromagnetic wave whose frequency is less than the first threshold.

In the implementation of this application, the spacing s between two adjacent radiation ports in the N radiation ports meets the foregoing condition, so that a low side lobe level can be implemented, and an anti-interference capability of the waveguide antenna can be improved. In this way, the cross-sectional height of the waveguide antenna can be reduced, thereby reducing complexity of the three-dimensional structure of the waveguide antenna, and ensuring an advantage of the waveguide antenna in radiation transmission efficiency.

In a possible implementation, a length L3 of any one of the N radiation ports in the third direction meets the following condition:

$$0.4\lambda \leq L3 \leq 0.7\lambda,$$

where

$\lambda$ represents the wavelength of the electromagnetic wave whose frequency is less than the first threshold.

In the implementation of this application, the length L3 of any one of the N radiation ports in the third direction meets the foregoing condition, so that a low side lobe level can be implemented, and an anti-interference capability of the waveguide antenna can be improved. In this way, the cross-sectional height of the waveguide antenna can be reduced, thereby reducing complexity of the three-dimensional structure of the waveguide antenna, and ensuring an advantage of the waveguide antenna in radiation transmission efficiency.

In a possible implementation, a cross-sectional height of the waveguide apparatus in the first direction is less than a second threshold.

In the implementation of this application, a signal can be coupled at a same layer in a transmission process by using the coupling cavity, to reduce the cross-sectional height of the waveguide antenna, so that the cross-sectional height of the waveguide apparatus in the first direction is less than the second threshold, thereby reducing complexity of the three-dimensional structure of the waveguide antenna, lowering a requirement on processing precision, and reducing processing costs.

It may be understood that the second threshold in embodiments of this application is not a fixed value, and may be adjusted based on different application scenarios. For example, compared with a current feed network of a waveguide antenna that is implemented by using a multi-stage power divider in a vertical direction, in the waveguide apparatus in embodiments of this application, the waveguide antenna has a lower cross-sectional height. In this case, the second threshold may be adjusted, so that the cross-sectional height of the waveguide apparatus in the first direction is less than the cross-sectional height of the current feed network of the waveguide antenna that uses the multi-stage power divider in the vertical direction.

In a possible implementation, a side lobe level of a directivity pattern corresponding to the waveguide apparatus is less than a third threshold.

In the implementation of this application, a spacing and/or a length of the N radiation ports are/is set, so that a low side lobe level can be implemented. In this way, the side lobe level of the directivity pattern corresponding to the waveguide apparatus is less than the third threshold, thereby improving an anti-interference capability of the waveguide antenna. In addition, the cross-sectional height of the waveguide antenna can be reduced, thereby reducing complexity of the three-dimensional structure of the waveguide antenna, and ensuring an advantage of the waveguide antenna in radiation transmission efficiency.

It may be understood that the third threshold in embodiments of this application is not a fixed value, and may be adjusted based on different application scenarios. For example, compared with a conventional PCB printed antenna, the waveguide apparatus in embodiments of this application has a great advantage in radiation efficiency. In this case, the third threshold may be adjusted, so that the side lobe level of the directivity pattern corresponding to the waveguide apparatus is less than a side lobe level of a directivity pattern corresponding to the conventional PCB printed antenna.

According to a second aspect, an embodiment of this application provides a radar or a radar system, where the radar or the radar system includes the waveguide apparatus according to the first aspect or any possible implementation of the first aspect. It should be noted that there may be a plurality of smart sensors integrated with sensors. When the smart sensor includes a millimeter-wave detection function, the smart sensor may also be referred to as a millimeter-wave radar or a millimeter-wave radar system.

According to a third aspect, an embodiment of this application provides a terminal device, where the terminal device includes the waveguide apparatus according to the first aspect or any possible implementation of the first aspect, or includes the radar or the radar system according to the second aspect.

According to a fourth aspect, an embodiment of this application provides a vehicle, where the vehicle includes the waveguide apparatus according to the first aspect or any possible implementation of the first aspect, or includes the radar or the radar system according to the second aspect, or includes the terminal device according to the third aspect.

In embodiments of this application, a signal can be coupled at a same layer in a transmission process by using the coupling cavity, to reduce the cross-sectional height of the waveguide antenna, thereby reducing complexity of the three-dimensional structure of the waveguide antenna, lowering a requirement on processing precision, and reducing processing costs.

## BRIEF DESCRIPTION OF DRAWINGS

To describe the technical solutions in embodiments of this application more clearly, the following briefly describes the accompanying drawings for describing embodiments of this application. It is clear that the accompanying drawings in the following descriptions show merely some embodiments of this application, and a person of ordinary skills in the art may derive other drawings from these accompanying drawings without creative efforts.

FIG. 1 is a diagram of radar distribution according to an embodiment of this application;
FIG. 2 is a diagram of an architecture of a radar according to an embodiment of this application;
FIG. 3 is a diagram of a structure of a feed network of a waveguide antenna according to an embodiment of this application;
FIG. 4 is a diagram of a structure of a waveguide apparatus according to an embodiment of this application;
FIG. 5 is a plane diagram of a waveguide apparatus according to an embodiment of this application;
FIG. 6 is a diagram of a structure of a coupling cavity according to an embodiment of this application;
FIG. 7A is a plane diagram of a coupling cavity according to an embodiment of this application;
FIG. 7B is a plane diagram of a coupling cavity according to an embodiment of this application;
FIG. 8A is a diagram of a structure of another waveguide apparatus according to an embodiment of this application;
FIG. 8B is a diagram of a structure of still another waveguide apparatus according to an embodiment of this application;
FIG. 9 is an effect diagram of a cross-sectional height according to an embodiment of this application;
FIG. 10 is an effect diagram of an impedance bandwidth and a return loss according to an embodiment of this application;
FIG. 11 is an effect diagram of a radiation directivity pattern according to an embodiment of this application;
FIG. 12 is an effect diagram of a two-dimensional array of a waveguide antenna according to an embodiment of this application;
FIG. 13A is an effect diagram of electrical performance of a two-dimensional array of a waveguide antenna according to an embodiment of this application; and
FIG. 13B is an effect diagram of electrical performance of a two-dimensional array of a waveguide antenna according to an embodiment of this application.

## DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with embodiments may be included in at least one embodiment of this application. The phrase shown in various positions in the specification may not necessarily refer to a same embodiment, and is not an independent or optional embodiment exclusive from another embodiment. It may be understood explicitly and implicitly by a person skilled in the art that embodiments described in this specification may be combined with other embodiments.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

As described in the background, currently, how to resolve a problem that a cross-sectional height of a waveguide antenna is large and a three-dimensional structure is complex needs to be studied. This application provides a waveguide apparatus and a related product, and relates to the field of millimeter-wave radar technologies, to reduce a cross-sectional height of a waveguide antenna, thereby reducing complexity of a three-dimensional structure of the waveguide antenna.

To describe the solutions of this application more clearly, the following first describes some knowledge related to a radar.

The radar is a transliterated name of the radar in English, and is short for radio detection and ranging, that is, radio detection and ranging. The radar is used to discover a target and determine a spatial position of the target by using a radio method.

A detection medium of the radar is an electromagnetic wave, and the radar implements detection of a target, for example, ranging, speed measurement, or azimuth measurement, through transmission and reception of the electromagnetic wave. The radar can range the target based on a time of flight of the electromagnetic wave. The time of flight is a time difference between receiving and transmitting of the electromagnetic wave. The radar transmits an electromagnetic wave signal, receives an echo signal of the electromagnetic wave signal, and may range the target based on a time difference between the received echo signal and the transmitted electromagnetic wave signal and a propagation speed of the electromagnetic wave. A distance between the radar and the target may be determined based on the following formula: $s=c\times t/2$, where s is the distance of the target, t is the time of flight, namely, a time period from transmitting of the electromagnetic wave signal from the radar to receiving of the echo signal, and c is the speed of light.

The radar implements speed measurement on the target based on a Doppler effect (Doppler effect). A principle of the Doppler effect is as follows: When a vibration source like a sound, light, and a radio wave moves relative to an observer at a relative speed, frequency of vibration received by the observer is different from frequency of the vibration source. When there is relative movement between the electromagnetic wave transmitted by the radar and a detected object, frequency of the echo signal is different from frequency of the transmitted electromagnetic wave signal. When the target approaches an antenna of the radar, the frequency of the echo signal is higher than the frequency of the transmitted electromagnetic wave signal. When the target moves away from the antenna of the radar, the frequency of the echo signal is lower than the frequency of the transmitted electromagnetic wave signal. A frequency change caused by the Doppler effect is referred to as a Doppler frequency shift, which is proportional to the relative speed and inversely proportional to the vibration frequency. Therefore, by detecting a frequency difference between the transmitted electromagnetic wave signal and the echo signal, a moving speed of the target relative to the radar, namely, the relative speed between the target and the radar, can be measured.

The radar may measure an azimuth in an amplitude method, a phase method, or the like. The amplitude method is used to measure an angle by using an amplitude value of an echo signal received by an antenna, and a change rule of the amplitude value depends on an antenna directivity pattern and a scanning manner of the antenna. The phase method is used to measure an angle by using a phase difference between echo signals received by a plurality of antenna elements. For example, the radar receives echo signals reflected by a same target by using an antenna array, and calculates the azimuth of the target based on a phase difference of the echo signals.

A detection medium of a millimeter-wave radar is an electromagnetic wave within a specific wavelength range, for example, a microwave. Currently, a millimeter wave (millimeter wave) and a centimeter wave (for example, a centimeter wave in a 24 GHz frequency band) adjacent to the millimeter wave in wave bands are commonly used. The millimeter wave is an electromagnetic wave with a wavelength of 1 to 10 millimeters (mm), and a wavelength of an electromagnetic wave in the 24 GHz frequency band is slightly greater than 10 mm. A wavelength of the detection medium of the millimeter-wave radar is in an overlapped wavelength range of the microwave and a far infrared wave. Therefore, the detection medium of the millimeter-wave radar has characteristics of two spectrums. According to a wave propagation theory, a higher frequency indicates a shorter wavelength, a higher resolution, and a stronger penetration capability, while in this case, a loss in a propagation process is larger, and a transmission distance is shorter. On the contrary, a lower frequency indicates a longer wavelength, a stronger diffraction capability, and a longer transmission distance. Therefore, compared with the microwave, the detection medium of the millimeter-wave radar has high resolution, good directivity, a strong anti-interference capability, and good detection performance. Compared with infrared, the detection medium of the millimeter-wave radar has lower atmospheric attenuation and better penetration to smoke and dust, and is less affected by weather. Therefore, the millimeter-wave radar is increasingly widely used in a plurality of fields such as intelligent vehicles, drones, intelligent transportation, and industrial automation.

Based on a detection distance, the radar can be classified into a long range radar (long range radar, LRR), a medium range radar (mid/medium range radar, MRR), and a short range radar (short range radar, SRR). The LRR poses a high requirement on a detection distance, but a low requirement on a width of a detection angular domain. The SRR poses a low requirement on a detection distance, but a high requirement on a width of a detection angular domain. A requirement of the MRR on a detection distance and a width of an angular domain may be understood as being between that of the LRR and that of the SRR. For example, the detection distance of the LRR may be more than 200 meters, and the width of the angular domain may be ±15°; the detection distance of the MRR may be within 100 meters, and the width of the angular domain may be ±45°; and the detection distance of the SRR may be within 60 meters, and the width of the angular domain may be ±80°. During use, different types of radars may be installed at different positions of a vehicle body based on a function requirement of autonomous driving and a use status of another sensor. A quantity and types of the radars may be selected based on a requirement.

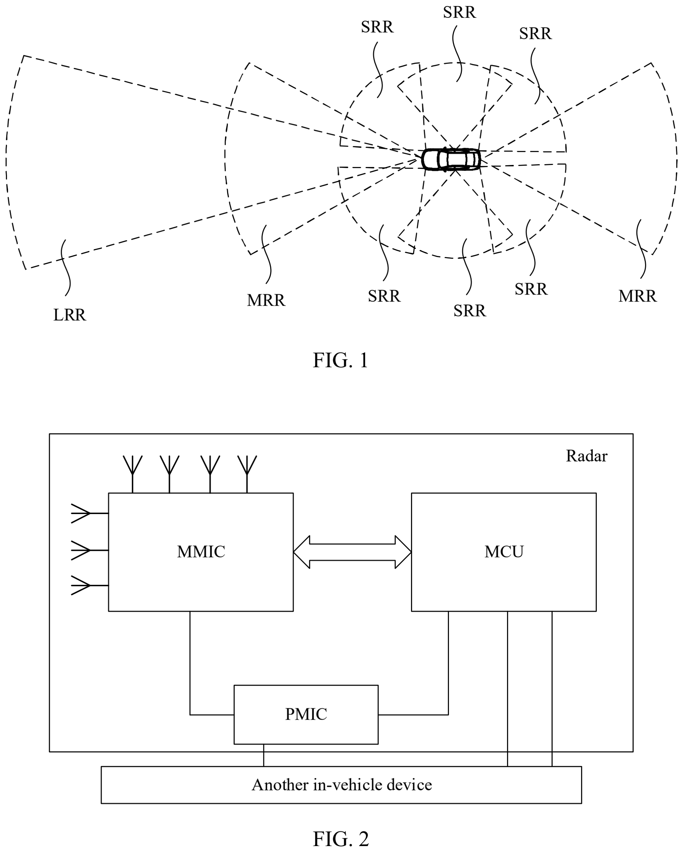

FIG. 1 is a diagram of radar distribution according to an embodiment of this application.

FIG. 1 shows possible installation positions of several types of radars. The installation positions are merely examples, and during actual use, more or fewer radars may be selected, and the types may also be adjusted.

As shown in FIG. 1, the LRR may be installed on the front of a vehicle body and serve as a forward radar; the MRR may be installed on the front or the rear of the vehicle body and serve as a forward radar or a backward radar; and the SRR may be installed on a side of the vehicle body or four corners of the vehicle body and serve as a side radar or an angle radar. In addition, the MRR may alternatively be installed on a side of the vehicle body or the four corners of the vehicle body, and the SRR may alternatively be installed on the front or the rear of the vehicle body.

The radar may be classified based on a modulation manner (or a radiation manner) of an electromagnetic wave of the radar. The modulation manner of the electromagnetic wave of the radar includes a pulse manner and a continuous wave manner. Therefore, the radar may be classified into a pulse radar and a continuous wave radar. The continuous wave manner may be further classified into frequency shift keying (frequency shift keying, FSK), phase shift keying (phase shift keying, PSK), a constant-frequency/single-frequency continuous wave (continuous wave, CW), a frequency modulated continuous wave (frequency modulated continuous wave, FMCW), multiple frequency shift keying (multiple frequency shift keying, MFSK), a phase modulated continuous wave (phase modulated continuous wave, PMCW), and another manner. Featuring in multiple target detection, high resolution, and low costs, the FMCW manner has become a mainstream radar modulation manner.

FIG. 2 is a diagram of an architecture of a radar according to an embodiment of this application.

As shown in FIG. 2, the radar includes an MMIC, a microcontroller unit (microcontroller unit, MCU), and a power management integrated circuit (power management integrated circuit, PMIC). The MMIC may integrate a function of a radio frequency part. The MCU may integrate a function of a baseband part, for example, integrate a function of a signal processor. In addition, the MCU may further provide a communication interface for communicating with another in-vehicle device. The PMIC is a chip that supplies power to a hardware system of the radar.

A waveguide (waveguide) is a structure used to guide an electromagnetic wave in a directional manner. In electromagnetics and communication engineering, the waveguide may be any linear structure that transmits electromagnetic waves between endpoints of the linear structure. The waveguide is mainly used as a microwave frequency transmission line, to connect a microwave transmitter and a microwave receiver to antennas of the microwave transmitter and the microwave receiver in a radar, a communication satellite, and a microwave radio link device.

Currently, for the development of system functions, antennas of in-vehicle millimeter-wave radars are required to have higher efficiency and wider frequency bands. Compared with a conventional printed circuit board (printed circuit board, PCB) printed antenna, a waveguide antenna has great advantages in radiation transmission efficiency and wide band characteristics. However, a three-dimensional structure of a feed network of the waveguide antenna is complex, which limits application of the waveguide antenna in millimeter-wave radar in terms of size and manufacturing cost. Therefore, if a structure of the waveguide antenna can be greatly simplified without deteriorating antenna performance, application of the waveguide antenna in the millimeter-wave radar can be greatly improved.

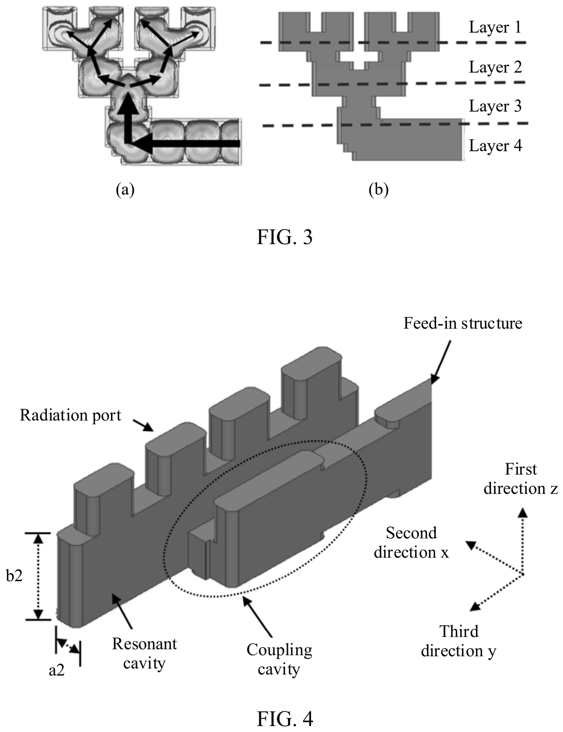

FIG. 3 is a diagram of a structure of a feed network of a waveguide antenna according to an embodiment of this application.

As shown in FIG. 3, (a) in FIG. 3 is a feed network of a waveguide antenna that is implemented by using a multi-stage T-shaped power divider in a vertical direction, and (b) in FIG. 3 is a cross-sectional diagram of the feed network of the waveguide antenna.

Specifically, in (a) in FIG. 3, a two-stage H-T power divider in the vertical direction is used to implement one-to-four power dividing feeding, and amplitude-phase weighting of a radiation port is implemented by using an offset feed design at final-stage power dividing, to reduce a side lobe level of a V-plane directivity pattern.

In a processing process for preparing the feed network of the waveguide antenna, processing is implemented in a four-layer separation manner. Each layer of mechanical part obtained through separation is processed and formed by using a plastic mold, then surface metallization is implemented by using a surface electroplating process, and finally a structure of the feed network of the waveguide antenna is obtained by using an inter-layer brazing process.

It can be learned from (a) and (b) in FIG. 3 that a cross-sectional height of the feed network of the waveguide antenna is large (there is a four-layer structure: a layer 1, a layer 2, a layer 3, and a layer 4). In addition, in this embodiment of this application, only four radiation ports are used as an example for description. As the radiation ports increase, the feed network of the waveguide antenna needs a T-shaped power divider of more stages, leading to a larger cross-sectional height of the feed network of the waveguide antenna. As a result, a three-dimensional structure of the feed network of the waveguide antenna is complex, poses a high requirement on processing precision because of multi-layer processing, has a poor anti-tolerance capability, and is subject to high processing costs, being impractical in engineering.

For a problem that the feed network of the waveguide antenna has a complex three-dimensional structure due to a large cross-sectional height, and is not practical in engineering, in this embodiment of this application, a feed network that is of a waveguide antenna of a radar and that can operate in a millimeter wave frequency band of 76 GHz to 81 GHz is designed based on an electromagnetic coupling principle, to reduce a cross-sectional height of the feed network of the waveguide antenna, thereby reducing complexity of the three-dimensional structure of the waveguide antenna, lowering a requirement on processing precision, and reducing processing costs. In addition, signal transmission performance of the antenna can be ensured at a small cross-sectional height.

It may be understood that a coupling structure (a slot, a hole, a cavity, or the like) based on the electromagnetic coupling principle may enable an electromagnetic field in a waveguide to implement transmission, power allocation, and combination in a more flexible and quicker manner.

The following describes the waveguide apparatus in embodiments of this application with reference to the accompanying drawings in embodiments of this application.

FIG. 4 is a diagram of a structure of a waveguide apparatus according to an embodiment of this application.

As shown in FIG. 4, **the waveguide apparatus includes:**

**N radiation ports, a resonant cavity, a coupling cavity, and a feed-in structure.**

N is an integer greater than or equal to 1. It may be understood that the waveguide apparatus shown in FIG. 4 including four radiation ports (in this case, N=4) is merely used as a possible example for description, and should not constitute a limitation on embodiments of this application.

The feed-in structure is configured to feed a signal.

The coupling cavity is configured to couple the signal fed from the feed-in structure to the resonant cavity.

The resonant cavity is configured to radiate the signal over the N radiation ports in a first direction (a z direction).

The coupling cavity is located between the resonant cavity and the feed-in structure. This may alternatively be represented as that the coupling cavity is configured to couple energy in the feed-in structure into the resonant cavity.

The coupling cavity is connected to the resonant cavity in a second direction (an x direction), and the first direction (the z direction) is perpendicular to the second direction (the x direction).

It may be understood that, the coupling cavity is connected to the resonant cavity in the waveguide apparatus in the second direction (the x direction), the resonant cavity radiates the signal over the N radiation ports in the first direction (the z direction), and the first direction (the z direction, namely, a vertical direction) is perpendicular to the second direction (the x direction). In this way, a signal can be coupled at a same layer in a transmission process (namely, a transmission process in which the signal is fed from the feed-in structure, sequentially passes through the coupling cavity and the resonant cavity, and then is radiated over the N radiation ports) by using the coupling cavity. Specifically, the coupling cavity and the resonant cavity are in a same-layer structure in the first direction (the z direction).

Specifically, in FIG. 4, the coupling cavity is a dashed-line area in FIG. 4 and is of an L-shaped structure. The coupling cavity is connected to a wider surface of the resonant cavity in the second direction (the x direction), and connected to the feed-in structure in the third direction (the y direction), so that the signal fed from the feed-in structure is coupled to the resonant cavity through the coupling cavity sequentially in the third direction (the y direction) and the second direction (the x direction). Then, the resonant cavity radiates the signal over the N radiation ports in the first direction (the z direction).

However, currently, a feed network of a waveguide antenna is implemented by using a multi-stage power divider in a vertical direction (as shown in FIG. 3). As a result, a signal is coupled at a plurality of layers in a transmission process. Consequently, a cross-sectional height of the waveguide antenna is large, a three-dimensional structure is complex, a requirement on processing precision is high, and processing costs are high.

For a same quantity of radiation ports, in the feed network of the waveguide antenna that is implemented by using the multi-stage power divider in the vertical direction, multi-layer coupling is performed (there is a four-layer structure: a layer 1, a layer 2, a layer 3, and a layer 4) in a transmission process of a signal, and therefore a cross-sectional height in the vertical direction is large. In comparison with the current feed network of the waveguide antenna that is implemented by using the multi-stage power divider in the vertical direction (as shown in FIG. 3), in this embodiment of this application, a signal is coupled at a same layer in a transmission process by using the coupling cavity (there is a two-layer structure: the coupling cavity and the resonant cavity are one layer in the z direction, namely, the first direction, and the radiation port is the other layer in the z direction, namely, the first direction), to reduce a cross-sectional height of the waveguide antenna, thereby reducing complexity of a three-dimensional structure of the waveguide antenna, lowering a requirement on processing precision, and reducing processing costs.

**In a possible embodiment, the coupling cavity is connected to the feed-in structure in a third direction (a y direction).**

The third direction (the y direction) is an extension direction of a cavity of the resonant cavity, and the third direction (the y direction) is perpendicular to both the first direction (the z direction) and the second direction (the x direction).

It may be understood that in this case, the first direction (the z direction), the second direction (the x direction), and the third direction (the y direction) are mutually perpendicular to form three-dimensional space. Specifically, the first direction (the z direction) is a direction in which a signal is radiated over the radiation port, the second direction (the x direction) is a direction perpendicular to a wide surface of the resonant cavity, and the third direction (the y direction) is a direction parallel to the wide surface of the resonant cavity.

In this embodiment of this application, cross sections of the feed-in structure, the coupling cavity, and the resonant cavity in the first direction (the z direction) are of a three-dimensional structure at a same layer. A signal is coupled at a same layer in a transmission process (namely, a transmission process in which the signal sequentially passes through the feed-in structure, the coupling cavity, and the resonant cavity) by using the coupling cavity, thereby reducing the cross-sectional height of the waveguide antenna, and reducing complexity of the waveguide antenna.

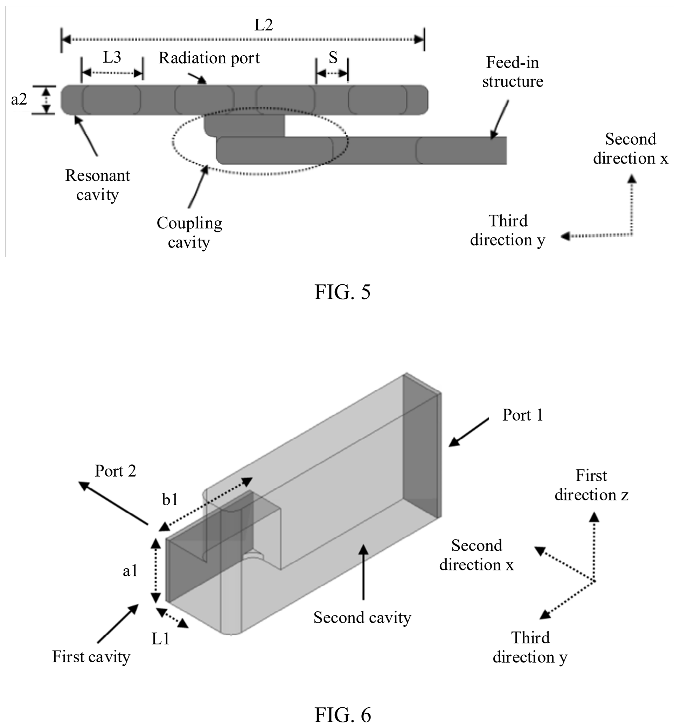

FIG. 5 is a plane diagram of a waveguide apparatus according to an embodiment of this application. It may be understood that the waveguide apparatus shown in FIG. 5 may be implemented as an independent embodiment. Alternatively, the waveguide apparatus shown in FIG. 5 may be understood as a variant or a supplement of the waveguide apparatus in FIG. 4. In this case, FIG. 5 may be understood as a top view of the waveguide apparatus shown in FIG. 4 in the first direction (the z direction).

As shown in FIG. 5, the waveguide apparatus includes:

four radiation ports, a resonant cavity, a coupling cavity, and a feed-in structure.

The feed-in structure is configured to feed a signal.

The coupling cavity is configured to couple the signal fed from the feed-in structure to the resonant cavity.

The resonant cavity is configured to radiate the signal over the four radiation ports in a first direction (a z direction).

The coupling cavity is located between the resonant cavity and the feed-in structure.

The coupling cavity is connected to the resonant cavity in a second direction (an x direction), the coupling cavity is connected to the feed-in structure in a third direction (a y direction), and the second direction (the x direction) is perpendicular to the third direction (the y direction).

It may be understood that, in this case, a plane formed by the second direction (the x direction) and the third direction (the y direction) is perpendicular to the first direction (the z direction), and the first direction (the z direction), the second direction (the x direction), and the third direction (the y direction) are mutually perpendicular to form three-dimensional space. Specifically, the first direction (the z direction) is a direction in which a signal is radiated over the radiation port, the second direction (the x direction) is a direction perpendicular to a wide surface of the resonant cavity, and the third direction (the y direction) is a direction parallel to the wide surface of the resonant cavity.

In this embodiment of this application, the signal is fed from the feed-in structure, successively passes through the coupling cavity and the resonant cavity, and is radiated over the four radiation ports. In addition, in a transmission process of the signal, the signal is coupled at a same layer by using the coupling cavity, thereby reducing the cross-sectional height of the waveguide antenna, and reducing complexity of the waveguide antenna.

In a possible embodiment, the coupling cavity in the waveguide apparatus shown in FIG. 4 or FIG. 5 includes a first cavity and a second cavity that are communicated.

Specifically, refer to FIG. 6. FIG. 6 is a diagram of a structure of a coupling cavity according to an embodiment of this application. It may be understood that the coupling cavity shown in FIG. 6 may be implemented as an independent embodiment. Alternatively, the coupling cavity shown in FIG. 6 may be understood as a variant or a supplement of the waveguide apparatus in FIG. 4 or FIG. 5. In this case, FIG. 6 may be understood as a component (the coupling cavity) of the waveguide apparatus shown in FIG. 4 or FIG. 5.

As shown in FIG. 6, **the coupling cavity includes a first cavity and a second cavity that are communicated.**

With reference to FIG. 4 or FIG. 5, it can be learned that the first cavity in the coupling cavity is connected to the resonant cavity shown in FIG. 6 in the second direction (the x direction). Specifically, a port 2 (a port 2) of the first cavity in the coupling cavity is connected to the resonant cavity in the second direction (the x direction). The second cavity in the coupling cavity is connected to the feed-in structure in the third direction (the y direction). Specifically, a port 1 (a port 1) of the second cavity in the coupling cavity is connected to the feed-in structure in the third direction (the y direction).

In addition, the first cavity and the second cavity are communicated. A signal is fed from the feed-in structure, enters the second cavity over the port 1 (the port 1), is output over the port 2 (the port 2) through the first cavity, is coupled to the resonant cavity, and then is radiated over the radiation port.

It may be understood that the second direction (the x direction) and the third direction (the y direction) are perpendicular to each other, and the first cavity and the second cavity in the coupling cavity are also perpendicular to each other in the second direction (the x direction) and the third direction (the y direction).

According to the coupling cavity in this embodiment of this application, a signal is coupled at a same layer in a transmission process in which the signal is fed from the feed-in structure, sequentially passes through the second cavity in the coupling cavity, the first cavity in the coupling cavity, and the resonant cavity, and then is radiated over the N radiation ports, thereby reducing the cross-sectional height of the waveguide antenna, and reducing complexity of the waveguide antenna.

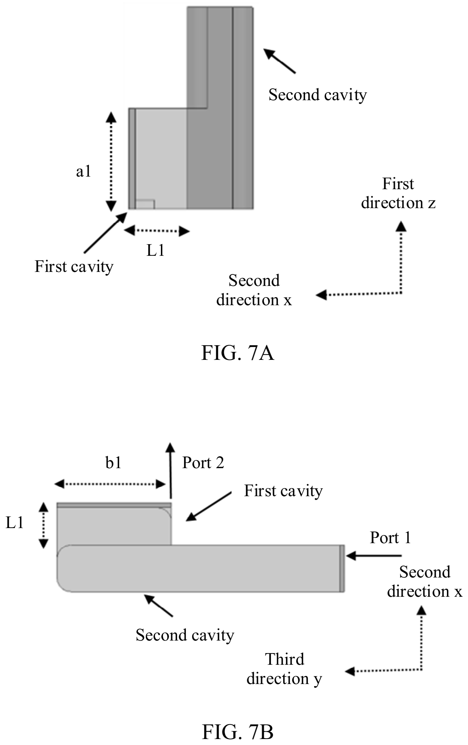

FIG. 7A and FIG. 7B are plane diagrams of a coupling cavity according to an embodiment of this application. It may be understood that, the coupling cavity shown in FIG. 7A and FIG. 7B may be implemented as an independent embodiment. Alternatively, the coupling cavity shown in FIG. 7A and FIG. 7B may be understood as a variant or supplement of the coupling cavity in FIG. 4 to FIG. 6. In this case, FIG. 7A may be understood as a side view of the coupling cavity in FIG. 4 to FIG. 6 in the third direction (the y direction), and FIG. 7B may be understood as a top view of the coupling cavity in FIG. 4 to FIG. 6 in the first direction (the z direction).

As shown in FIG. 7A and FIG. 7B, the coupling cavity includes a first cavity and a second cavity that are communicated.

The first cavity is connected to the resonant cavity in the second direction (the x direction). Specifically, a port 2 (a port 2) of the first cavity is connected to the resonant cavity in the second direction (the x direction). The second cavity is connected to the feed-in structure in the third direction (the y direction). Specifically, a port 1 (a port 1) of the second cavity is connected to the feed-in structure in the third direction (the y direction).

In addition, the first cavity and the second cavity are communicated. A signal is fed from the feed-in structure, enters the second cavity over the port 1 (the port 1), is output over the port 2 (the port 2) through the first cavity, is coupled to the resonant cavity, and then is radiated over the radiation port.

It may be understood that, in FIG. 7A, the first direction (the z direction) is perpendicular to the second direction (the x direction), a plane formed by the first direction (the z direction) and the second direction (the x direction) is perpendicular to the third direction (the y direction), and the first direction (the z direction), the second direction (the x direction), and the third direction (the y direction) are mutually perpendicular to form three-dimensional space. It may be understood that the first cavity and the second cavity are also perpendicular to each other in the second direction (the x direction) and the first direction (the z direction).

It may be understood that, in FIG. 7B, the third direction (the y direction) is perpendicular to the second direction (the x direction), a plane formed by the third direction (the y direction) and the second direction (the x direction) is perpendicular to the first direction (the z direction), and the first direction (the z direction), the second direction (the x direction), and the third direction (the y direction) are mutually perpendicular to form three-dimensional space. It may be understood that the first cavity and the second cavity are also perpendicular to each other in the second direction (the x direction) and the third direction (the y direction).

According to the coupling cavity in this embodiment of this application, a signal is coupled at a same layer in a transmission process in which the signal is fed from the feed-in structure, sequentially passes through the second cavity in the coupling cavity, the first cavity in the coupling cavity, and the resonant cavity, and then is radiated over the N radiation ports, thereby reducing the cross-sectional height of the waveguide antenna, and reducing complexity of the waveguide antenna.

**In a possible embodiment, value ranges of cross-sectional side lengths al and b1 of the first cavity in the second direction (the x direction) meet the following condition:**

$$0.3\lambda \leq b1 \leq 0.8\lambda, \text{ and } 0 < a1 \leq 1/2 \times b1,$$

where

$\lambda$ represents a wavelength of an electromagnetic wave whose frequency is less than a first threshold.

Specifically, refer to FIG. 6, FIG. 7A, and FIG. 7B. a1 is a shorter side of a cross section of the first cavity in the second direction (the x direction), and b1 is a longer side of the cross section of the first cavity in the second direction (the x direction).

It may be understood that the first threshold in embodiments of this application is not a fixed value, and may be adjusted based on different application scenarios. For example, the waveguide apparatus in this embodiment of this application may be used in a millimeter wave of 76 GHz to 81 GHz. In this case, the first threshold may be adjusted, so that $\lambda$ represents a wavelength of the millimeter wave of 76 GHz to 81 GHz.

Optionally, al and b1 are perpendicular to each other.

It may be understood that, in this case, the cross section of the first cavity in the second direction (the x direction) is a rectangle.

In a possible embodiment, a length L1 of the first cavity in the second direction (the x direction) meets the following condition:

$$0.1\lambda \leq L1 \leq 0.4\lambda,$$

where

$\lambda$ represents the wavelength of the electromagnetic wave whose frequency is less than the first threshold.

Specifically, refer to FIG. 6, FIG. 7A, and FIG. 7B. L1 is the length of the first cavity in the second direction (the x direction), namely, a length of the first cavity in a signal transmission direction in the cavity.

It may be understood that the first threshold in embodiments of this application is not a fixed value, and may be adjusted based on different application scenarios. For example, the waveguide apparatus in this embodiment of this application may be used in a millimeter wave of 76 GHz to 81 GHz. In this case, the first threshold may be adjusted, so that $\lambda$ represents a wavelength of the millimeter wave of 76 GHz to 81 GHz.

It should be understood that the foregoing sizes a1, b1, and L1 of the first cavity are merely used as possible examples for description, and should not constitute a limitation on embodiments of this application. Embodiments obtained based on the foregoing example sizes or proper variations shall fall within the protection scope of embodiments of this application.

In this embodiment of this application, the sizes a1, b1, and L1 of the first cavity are set, so that impedance matching conversion can be implemented, and transmission efficiency of a signal in the coupling cavity is improved.

In a possible embodiment, value ranges of cross-sectional side lengths a2 and b2 of the resonant cavity in the third direction (the y direction) meet the following condition:

$$0.6\lambda \leq b2 \leq \lambda, \text{ and } 0.35 \times b2 < a2 \leq 0.5 \times b2,$$

where

$\lambda$ represents the wavelength of the electromagnetic wave whose frequency is less than the first threshold.

Specifically, refer to FIG. 4 and FIG. 5. a2 is a shorter side of a cross section of the resonant cavity in the third direction (the y direction), and b2 is a longer side of the cross section of the resonant cavity in the third direction (the y direction).

It may be understood that the first threshold in embodiments of this application is not a fixed value, and may be adjusted based on different application scenarios. For example, the waveguide apparatus in this embodiment of this application may be used in a millimeter wave of 76 GHz to 81 GHz. In this case, the first threshold may be adjusted, so that $\lambda$ represents a wavelength of the millimeter wave of 76 GHz to 81 GHz.

Optionally, a2 and b2 are perpendicular to each other.

It may be understood that, in this case, the cross section of the resonant cavity in the third direction (the y direction) is a rectangle.

In a possible embodiment, a length L2 of the resonant cavity in the third direction (the y direction) meets the following condition:

$$0.85 \times \left(N \times \lambda_g/2\right) \leq L2 \leq 1.15 \times \left(N \times \lambda_g/2\right),$$

where

$\lambda_g$ represents a wavelength of an electromagnetic wave transmitted in the resonant cavity.

Specifically, refer to FIG. 5. L2 is the length of the resonant cavity in the third direction (the y direction).

It should be understood that the foregoing sizes a2, b2, and L2 of the resonant cavity are merely used as possible examples for description, and should not constitute a limitation on embodiments of this application. Embodiments obtained based on the foregoing example sizes or proper variations shall fall within the protection scope of embodiments of this application.

In this embodiment of this application, the sizes a2, b2, and L2 of the resonant cavity are set, so that steady-state field distribution in the resonant cavity can be implemented, and transmission efficiency of a signal in the resonant cavity is improved.

Optionally, the following describes, with reference to a steady-state field distribution principle of the resonant cavity, conditions that the sizes a2, b2, and L2 of the resonant cavity meet. The conditions are as follows.

Right-angle components of an electromagnetic field of the electromagnetic wave in the resonant cavity meet the Helmholtz equation:

$$\mathrm{u}(x, y, z) = X(x)Y(y)Z(z)$$

$$\nabla^2 u + k^2 u = 0$$

$$k_x^2 + k_y^2 + k_z^2 = k^2 = \omega^2 \varepsilon \mu$$

According to metal boundary conditions, the following can be obtained:

$$E_x = A_1 \cos k_x x \sin k_y y \sin k_z z$$

$$E_y = A_2 \cos k_y y \sin k_x x \sin k_z z$$

$$E_z = A_3 \cos k_z z \sin k_y y \sin k_x x$$

According to boundary conditions of the sizes a2, b2, and L2 of the resonant cavity, K×(a2, b2, L2) has to be an integer multiple of π, and the following is obtained:

$$k_x = \frac{m\pi}{a2}$$

$$k_y = \frac{n\pi}{L_2}$$

$$k_z = \frac{p\pi}{b2}$$

Herein, m, n, p = 0, 1, 2, 3, ⋯; and m, n, p = 0, 1, 2, 3, ⋯ is substituted into $k_x^2 + k_y^2 + k_z^2 = k^2 = \omega^2 \varepsilon \mu$ to obtain a resonance frequency:

$$\omega_{mnp} = \frac{\pi}{\sqrt{\varepsilon\mu}} \sqrt{\left(\frac{m}{a2}\right)^2 + \left(\frac{n}{L_2}\right)^2 + \left(\frac{p}{b2}\right)^2}$$

$$f_{mnp} = \frac{1}{2\sqrt{\varepsilon\mu}} \sqrt{\left(\frac{m}{a2}\right)^2 + \left(\frac{n}{L_2}\right)^2 + \left(\frac{p}{b2}\right)^2}$$

Herein, $\omega_{mnp}$ is a local frequency of the resonant cavity, and $f_{mnp}$ is a resonance frequency of the resonant cavity.

When a lowest resonance frequency of the resonant cavity is m, n, p = 1,1,0, the following is obtained:

$$f_{110} = \frac{1}{2\sqrt{\varepsilon\mu}} \sqrt{\left(\frac{1}{a2}\right)^2 + \left(\frac{1}{L_2}\right)^2}$$

Corresponding wavelengths are as follows:

$$\lambda_{110} = \frac{2}{\sqrt{\left(\frac{1}{a2}\right)^2 + \left(\frac{1}{L_2}\right)^2}}$$

In this embodiment of this application, it is assumed that the resonance frequency is 76.5 Ghz, and m, n, p = 1, 2 × N - 1, 0, where N is a quantity of radiation ports, so that the length L2 of the resonant cavity in the third direction (the y direction) can be obtained through reverse solution.

**In a possible embodiment, a spacing s between two adjacent radiation ports in the N radiation ports meets the following condition:**

$$0.3\lambda \leq s \leq \lambda,$$

where
$\lambda$ represents the wavelength of the electromagnetic wave whose frequency is less than the first threshold.

Specifically, refer to FIG. 5. s is a spacing between any two adjacent radiation ports.

It may be understood that the first threshold in embodiments of this application is not a fixed value, and may be adjusted based on different application scenarios. For example, the waveguide apparatus in this embodiment of this application may be used in a millimeter wave of 76 GHz to 81 GHz. In this case, the first threshold may be adjusted, so that $\lambda$ represents a wavelength of the millimeter wave of 76 GHz to 81 GHz.

**In a possible embodiment, a length L3 of any one of the N radiation ports in the third direction (the y direction) meets the following condition:**

$$0.4\lambda \leq L3 \leq 0.7\lambda,$$

where
$\lambda$ represents the wavelength of the electromagnetic wave whose frequency is less than the first threshold.

Specifically, refer to FIG. 5. L3 is the length of any radiation port in the third direction (the y direction).

It may be understood that the first threshold in embodiments of this application is not a fixed value, and may be adjusted based on different application scenarios. For example, the waveguide apparatus in this embodiment of this application may be used in a millimeter wave of 76 GHz to 81 GHz. In this case, the first threshold may be adjusted, so that $\lambda$ represents a wavelength of the millimeter wave of 76 GHz to 81 GHz.

It should be understood that the foregoing sizes s and L3 of the radiation port are merely used as possible examples for description, and should not constitute a limitation on embodiments of this application. Embodiments obtained based on the foregoing example sizes or proper variations shall fall within the protection scope of embodiments of this application.

In this embodiment of this application, the spacing s between two adjacent radiation ports in the N radiation ports and the length L3 of any one of the N radiation ports in the third direction are set, so that a low side lobe level can be implemented, and an anti-interference capability of the waveguide antenna can be improved. In this way, the cross-sectional height of the waveguide antenna can be reduced, thereby reducing complexity of the three-dimensional structure of the waveguide antenna, and ensuring an advantage of the waveguide antenna in radiation transmission efficiency.

**In a possible embodiment, an end at which the first cavity is connected to the resonant cavity is located at a central position of the resonant cavity in the third direction (the y direction).**

Specifically, refer to FIG. 5. The four radiation ports are evenly distributed on a narrow side wall of the resonant cavity, and the end at which the first cavity in the coupling cavity is connected to the resonant cavity is located at the central position of the resonant cavity in the third direction (the y direction), that is, is located at a central position of the four radiation ports in the third direction (the y direction).

It may be understood that the end at which the first cavity is connected to the resonant cavity is located at the central position of the resonant cavity in the third direction (the y direction), which is beneficial to improving signal radiation efficiency. However, this should not constitute a limitation on embodiments of this application. The end at which the first cavity is connected to the resonant cavity may be further located at another position of the resonant cavity in the third direction (the y direction). This falls within the protection scope of embodiments of this application.

In this embodiment of this application, the end at which the first cavity is connected to the resonant cavity is located at the central position of the resonant cavity in the third direction (the y direction), so that a signal in the first cavity is radiated over the N radiation ports through the resonant cavity, thereby improving signal radiation efficiency. In addition, the radiation ports are evenly distributed on the narrow side wall of the resonant cavity, so that signal radiation efficiency can further be improved.

**In a possible embodiment, an end at which the first cavity is connected to the second cavity is located at any position between a bottom and a top of the second cavity in the first direction (the z direction).**

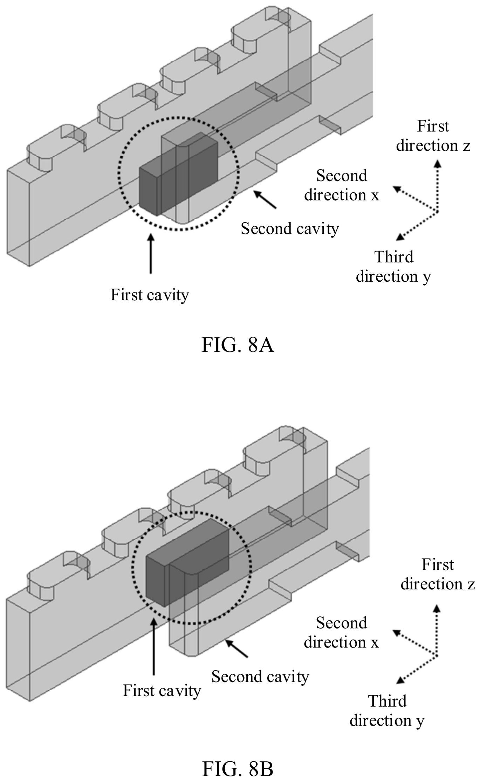

FIG. 8A and 8B are diagrams of a structure of a waveguide apparatus according to an embodiment of this application.

As shown in FIG. 8A, the end at which the first cavity is connected to the second cavity is located at a bottom position of the second cavity in the first direction (the z direction).

As shown in FIG. 8B, the end at which the first cavity is connected to the second cavity is located at a top position of the second cavity in the first direction (the z direction).

It can be learned from FIG. 8A and FIG. 8B that the end at which the first cavity is connected to the second cavity is located at any position between the bottom and the top of the second cavity in the first direction (the z direction).

In this embodiment of this application, the end at which the first cavity is connected to the second cavity is located at any position between the bottom and the top of the second cavity in the first direction (the z direction). In this way, an electric field can rotate in a vertical plane, so that a signal fed from the feed-in structure can be coupled at a same layer and transmitted to the resonant cavity through the first cavity and the second cavity in the coupling cavity, thereby reducing the cross-sectional height of the waveguide antenna, and reducing complexity of the waveguide antenna.

**It may be understood that, in the waveguide apparatuses shown in FIG. 4 to FIG. 6, FIG. 7A and FIG. 7B, and FIG. 8A and FIG. 8B, a cross-sectional height of the waveguide apparatus in the first direction (the z direction) is less than a second threshold.**

The second threshold in embodiments of this application is not a fixed value, and may be adjusted based on different application scenarios. For example, compared with a current feed network of a waveguide antenna that is implemented by using a multi-stage power divider in a vertical direction, in the waveguide apparatus in embodiments of this application, the waveguide antenna has a lower cross-sectional height. In this case, the second threshold may be adjusted, so that the cross-sectional height of the waveguide apparatus in the first direction (the z direction) is less than the cross-sectional height of the current feed network of the waveguide antenna that uses the multi-stage power divider in the vertical direction.

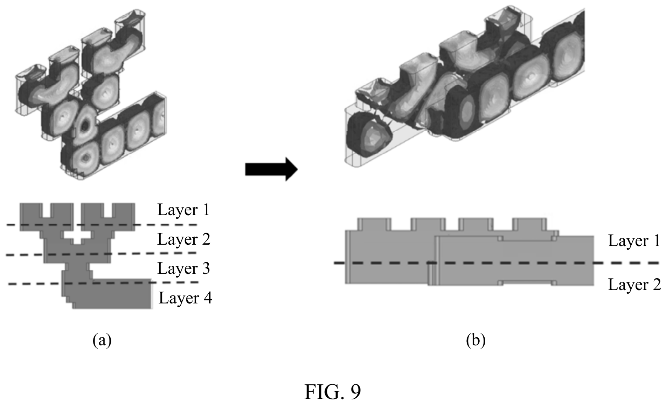

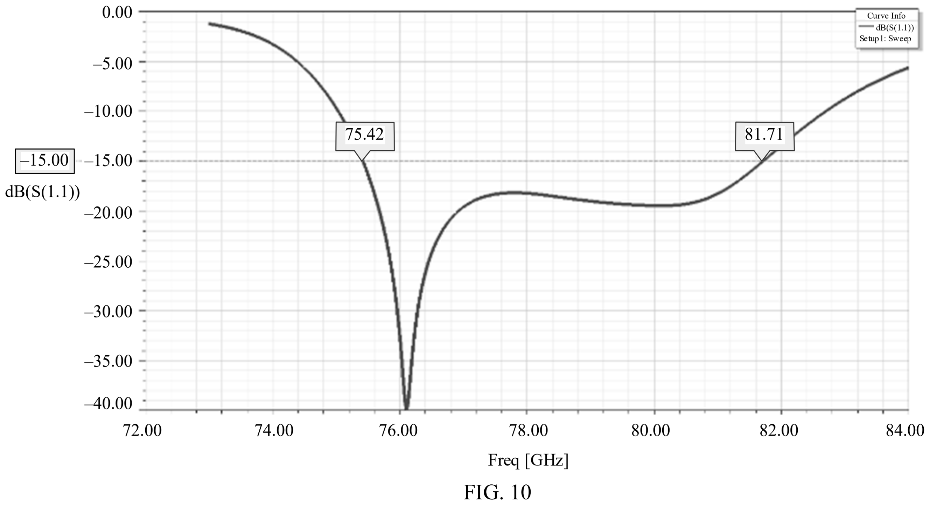

Specifically, refer to FIG. 9 and FIG. 10. FIG. 9 is an effect diagram of a cross-sectional height according to an embodiment of this application. FIG. 10 is an effect diagram of an impedance bandwidth and a return loss according to an embodiment of this application.

As shown in FIG. 9, a two-stage H-T power divider in the vertical direction is used to implement one-to-four power division feeding in (a) in FIG. 9. Correspondingly, a cross-sectional height of a feed network of the waveguide antenna is large (There is a four-layer structure: a layer 1, a layer 2, a layer 3, and a layer 4). However, in (b) in FIG. 9 (namely, this embodiment of this application), a signal is coupled at a same layer in a transmission process by using the coupling cavity. Correspondingly, a cross-sectional height of a feed network of the waveguide antenna is small (there is a two-layer structure, where the coupling cavity and the resonant cavity are a layer 1 in the z direction, namely, the first direction, and the radiation port is a layer 2 in the z direction, namely, the first direction).

It can be learned that, compared with the current feed network of the waveguide antenna that is implemented by using the multi-stage power divider in the vertical direction, when there are a same quantity of radiation ports, in embodiments of this application, a signal can be coupled at a same layer in a transmission process by using the coupling cavity, so that the cross-sectional height of the waveguide antenna can be reduced. In this way, a cross-sectional height of the waveguide apparatus in the first direction (the z direction) is less than the second threshold, thereby reducing complexity of a three-dimensional structure of the waveguide antenna, lowering a requirement on processing precision, and reducing processing costs.

As shown in FIG. 10, it can be learned that a port return loss S11 in a frequency range of 75.5 GHz to 81.7 GHz is less than or equal to -15 dB, which meets a wide-band operating requirement on a millimeter-wave radar.

Therefore, it can be learned from FIG. 9 and FIG. 10 that in the waveguide apparatus in embodiments of this application, the cross-sectional height of the waveguide antenna can be reduced, thereby reducing complexity of the three-dimensional structure of the waveguide antenna, and ensuring an advantage of the waveguide antenna in radiation transmission efficiency.

**It may be understood that, in the waveguide apparatuses shown in FIG. 4 to FIG. 6, FIG. 7A and FIG. 7B, and FIG. 8A and FIG. 8B, side lobe levels of directivity patterns corresponding to the waveguide apparatuses are**

**less than a third threshold.**

The third threshold in embodiments of this application is not a fixed value, and may be adjusted based on different application scenarios. For example, compared with a conventional PCB printed antenna, the waveguide apparatus in embodiments of this application has a great advantage in radiation efficiency. In this case, the third threshold may be adjusted, so that the side lobe level of the directivity pattern corresponding to the waveguide apparatus is less than a side lobe level of a directivity pattern corresponding to the conventional PCB printed antenna. For another example, compared with a current feed network of a waveguide antenna that is implemented by using a multi-stage power divider in a vertical direction, the waveguide apparatus in embodiments of this application has a great advantage in radiation efficiency. In this case, the third threshold may be adjusted, so that the side lobe level of the directivity pattern corresponding to the waveguide apparatus is less than a side lobe level of a directivity pattern corresponding to the current feed network of the waveguide antenna that is implemented by using the multi-stage power divider in the vertical direction.

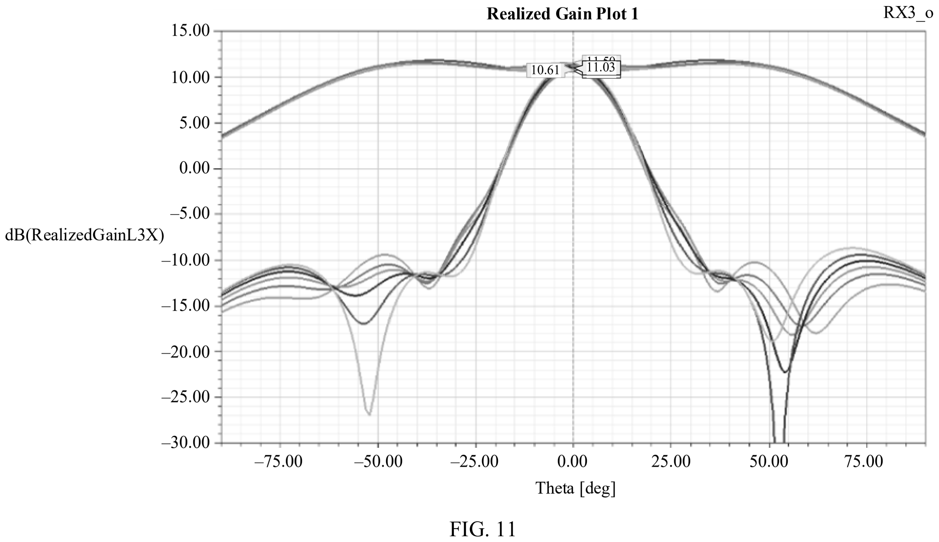

FIG. 11 is an effect diagram of a radiation directivity pattern according to an embodiment of this application.

As shown in FIG. 11, it can be learned that there is no beam direction deviation in a frequency range of 76 GHz to 81 GHz, and a beam gain is greater than or equal to 11 dBi. A V-plane side lobe level SLL corresponding to the lowest frequency 76 GHz is greater than or equal to 20 dB. In this way, a low side lobe level can be implemented, so that the side lobe level of the directivity pattern corresponding to the waveguide apparatus is less than the third threshold, thereby improving an anti-interference capability of the waveguide antenna. In this way, the cross-sectional height of the waveguide antenna can be reduced, thereby reducing complexity of the three-dimensional structure of the waveguide antenna, and ensuring an advantage of the waveguide antenna in radiation transmission efficiency.

Optionally, the waveguide apparatuses shown in FIG. 4 to FIG. 6, FIG. 7A and FIG. 7B, and FIG. 8A and FIG. 8B may include a plurality of waveguide antennas.

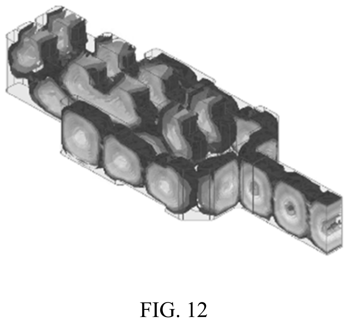

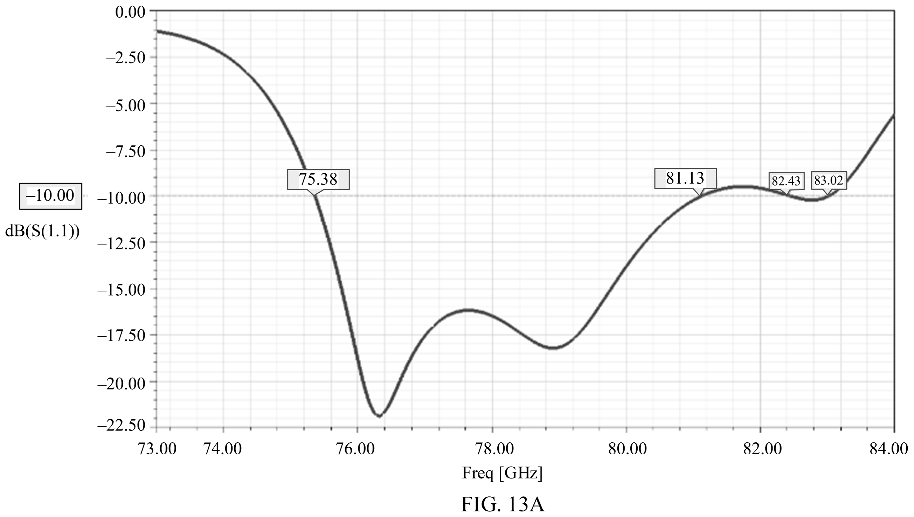

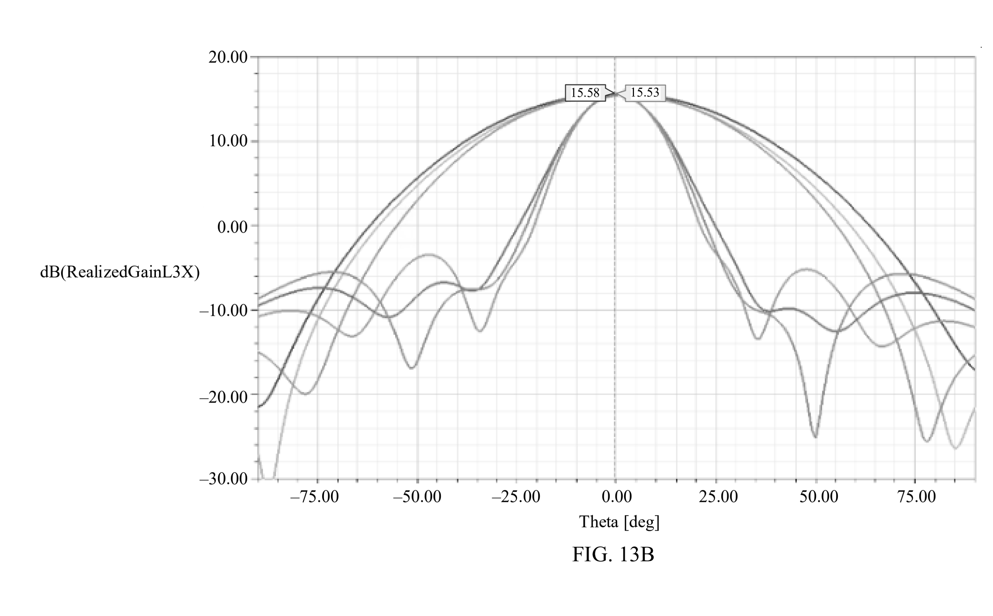

For example, with reference to FIG. 12, FIG. 13A, and FIG. 13B, the following describes a small-spaced two-dimensional array formed by combining two waveguide antenna elements and an E-T power divider.

FIG. 12 is an effect diagram of a two-dimensional array of a waveguide antenna according to an embodiment of this application.

As shown in FIG. 12, it can be learned that the waveguide apparatus is a small-spaced two-dimensional array formed by combining two waveguide antenna elements and an E-T power divider, and can implement equal-amplitude in-phase performance of a two-dimensional array.

Specifically, refer to FIG. 13A and FIG. 13B. FIG. 13A and FIG. 13B are diagrams of an effect of electrical performance of a two-dimensional array of a waveguide antenna according to an embodiment of this application.

As shown in FIG. 13A and FIG. 13B, it can be learned that in a range of 76 GHz to 81 GHz, S11 of the two-dimensional array of the waveguide antenna in FIG. 12 is less than or equal to -12 dB, and a gain in an entire frequency band is increased to 15 dBi, so that equal-amplitude in-phase performance of a two-dimensional array can be implemented.

**In addition, in a possible embodiment, a waveguide apparatus preparation method is further provided. A specific procedure of the preparation method is as follows.**

Method 1: N radiation ports, a resonant cavity, a coupling cavity, and a feed-in structure may be obtained through plastic layered molding, then electroplating is performed on surfaces of molds, and finally, a waveguide apparatus including the N radiation ports, the resonant cavity, the coupling cavity, and the feed-in structure is obtained through layer brazing.

A procedure of the plastic layered molding is as follows: Plastic is first heated and melted in the bottom of an injection molding machine, and is then pushed by a screw of the injection molding machine to enter a mold cavity through an injection nozzle of the injection molding machine and a mold casting system. In this way, the plastic is cooled and hardened to form a product after demolding.

Plastic electroplating is to cover a metal layer on a surface of plastic, to impart metal properties to the plastic. A specific procedure is as follows: surface cleaning, solvent treatment, adjustment treatment, and sensitization.

Brazing refers to a welding method for connecting metals by filling a gap of a solid workpiece with liquid brazing materials after a welding part and the brazing material whose melting point is lower than that of the welding part are both heated to a melting temperature of the brazing material. During brazing, an oxidation film and oil stains on a contact surface of base metals need to be removed first, so that a capillary tube can take effect after the brazing material melts, and a wettability and capillary fluidity of the brazing material can be increased.

Method 2: Alternatively, N radiation ports, a resonant cavity, a coupling cavity, and a feed-in structure may be obtained through layered machining, and then the N radiation ports, the resonant cavity, the coupling cavity, and the feed-in structure are formed through welding, to obtain the waveguide apparatus.

In the waveguide apparatus obtained in the foregoing preparation methods, a cross-sectional height of a waveguide antenna can be reduced, thereby reducing complexity of a three-dimensional structure of the waveguide antenna, and ensuring an advantage of the waveguide antenna in radiation transmission efficiency.

For example, the waveguide apparatuses shown in any one of FIG. 4 to FIG. 6, FIG. 7A and FIG. 7B, and FIG. 8A and FIG. 8B may be obtained in the foregoing waveguide apparatus preparation method. For structural features and functional features of the waveguide apparatus, refer to the descriptions of FIG. 4 to FIG. 6, FIG. 7A and FIG. 7B, and FIG. 8A and FIG. 8B. Details are not described herein again.

This application provides a radar or a radar system. The radar or the radar system includes the waveguide apparatus provided in this application. It should be noted that there may be a plurality of smart sensors integrated with sensors. When the smart sensor includes a millimeter-wave detection function, the smart sensor may also be referred to as a millimeter-wave radar or a millimeter-wave radar system.

This application provides a terminal device. The terminal device includes the waveguide apparatus provided in this application. For example, the terminal device may be a transportation tool like a transportation means used in any possible scenario, for example, a vehicle, a truck, aircraft, an uncrewed aerial vehicle, a slow transport vehicle, spacecraft, or a ship, or may be any device that can carry a millimeter-wave detection apparatus, for example, a surveying and mapping device. One or more waveguide apparatuses provided in this application are deployed on the terminal device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A waveguide apparatus, comprising:

    N radiation ports, a resonant cavity, a coupling cavity, and a feed-in structure, wherein N is an integer greater than or equal to 1;
    the feed-in structure is configured to feed a signal;
    the coupling cavity is configured to couple the signal to the resonant cavity;
    the resonant cavity is configured to radiate the signal over the N radiation ports in a first direction;
    the coupling cavity is located between the resonant cavity and the feed-in structure; and
    the coupling cavity is connected to the resonant cavity in a second direction, and the first direction is perpendicular to the second direction.

2. The waveguide apparatus according to claim 1, wherein the coupling cavity is connected to the feed-in structure in a third direction, and the third direction is perpendicular to both the first direction and the second direction.

3. The waveguide apparatus according to claim 1 or 2, wherein the coupling cavity comprises a first cavity and a second cavity that are communicated, the first cavity is connected to the resonant cavity in the second direction, and the second cavity is connected to the feed-in structure in the third direction.

4. The waveguide apparatus according to claim 3, wherein value ranges of cross-sectional side lengths a1 and b1 of the first cavity in the second direction meet the following condition:

$$0.3\lambda \leq b1 \leq 0.8\lambda, \text{ and } 0 < a1 \leq 1/2 \times b1,$$

    wherein
    $\lambda$ represents a wavelength of an electromagnetic wave whose frequency is less than a first threshold.

5. The waveguide apparatus according to claim 4, wherein a1 and b1 are perpendicular to each other.

6. The waveguide apparatus according to claim 4 or 5, wherein a length L1 of the first cavity in the second direction meets the following condition:

$$0.1\lambda \leq L1 \leq 0.4\lambda,$$

    wherein
    $\lambda$ represents the wavelength of the electromagnetic wave whose frequency is less than the first threshold.

7. The waveguide apparatus according to any one of claims 3 to 6, wherein an end at which the first cavity is connected to the resonant cavity is located at a central position of the resonant cavity in the third direction.

8.  The waveguide apparatus according to any one of claims 3 to 7, wherein an end at which the first cavity is connected to the second cavity is located at any position between a bottom and a top of the second cavity in the first direction.

9.  The waveguide apparatus according to any one of claims 1 to 8, wherein value ranges of cross-sectional side lengths a2 and b2 of the resonant cavity in the third direction meet the following condition:

$$0.6\lambda \leq b2 \leq \lambda, \text{ and } 0.35 \times b2 < a2 \leq 0.5 \times b2,$$

wherein
$\lambda$ represents the wavelength of the electromagnetic wave whose frequency is less than the first threshold.

10. The waveguide apparatus according to claim 9, wherein a2 and b2 are perpendicular to each other.

11. The waveguide apparatus according to any one of claims 1 to 10, wherein a length L2 of the resonant cavity in the third direction meets the following condition:

$$0.85 \times \left(N \times \lambda_g/2\right) \leq L2 \leq 1.15 \times \left(N \times \lambda_g/2\right),$$

wherein
$\lambda_g$ represents a wavelength of an electromagnetic wave transmitted in the resonant cavity.

12. The waveguide apparatus according to any one of claims 1 to 11, wherein a spacing s between two adjacent radiation ports in the N radiation ports meets the following condition:

$$0.3\lambda \leq s \leq \lambda,$$

wherein
$\lambda$ represents the wavelength of the electromagnetic wave whose frequency is less than the first threshold.

13. The waveguide apparatus according to any one of claims 1 to 12, wherein a length L3 of any one of the N radiation ports in the third direction meets the following condition:

$$0.4\lambda \leq L3 \leq 0.7\lambda,$$

wherein
$\lambda$ represents the wavelength of the electromagnetic wave whose frequency is less than the first threshold.

14. The waveguide apparatus according to any one of claims 1 to 13, wherein a cross-sectional height of the waveguide apparatus in the first direction is less than a second threshold.

15. The waveguide apparatus according to any one of claims 1 to 14, wherein a side lobe level of a directivity pattern corresponding to the waveguide apparatus is less than a third threshold.

16. A radar, wherein the radar comprises the waveguide apparatus according to any one of claims 1 to 15.

17. A terminal device, wherein the terminal device comprises the waveguide apparatus according to any one of claims 1 to 15, or the radar according to claim 16.

18. A vehicle, wherein the vehicle comprises the waveguide apparatus according to any one of claims 1 to 15, or the radar according to claim 16, or the terminal device according to claim 17.

FIG. 1

FIG. 2

Layer 1
Layer 2
Layer 3
Layer 4

(a)　　　　　　　　　　(b)

FIG. 3

Feed-in structure

Radiation port

First
direction z

Second
direction x

b2

Third
direction y

a2

Resonant
cavity

Coupling
cavity

FIG. 4

FIG. 5

FIG. 6

a1

L1

First cavity

Second cavity

First
direction z

Second
direction x

**FIG. 7A**

b1

Port 2

L1

First cavity

Port 1

Second
direction x

Second cavity

Third
direction y

**FIG. 7B**

First
direction z

Second
direction x

Second cavity

Third
direction y

First cavity

FIG. 8A

First
direction z

Second
direction x

Second cavity

Third
direction y

First cavity

FIG. 8B

Layer 1
Layer 2
Layer 3
Layer 4

(a)

Layer 1
Layer 2

(b)

FIG. 9

FIG. 10

EP 4 651 298 A1

FIG. 11

EP 4 651 298 A1

FIG. 12

FIG. 13A

FIG. 13B

## INTERNATIONAL SEARCH REPORT

| International application No. |
| --- |
| **PCT/CN2023/076197** |

### A. CLASSIFICATION OF SUBJECT MATTER

H01P5/08(2006.01)i; H01Q1/32(2006.01)i; H01Q21/06(2006.01)i; G01S13/931(2020.01)i; H01P3/12(2006.01)i

According to International Patent Classification (IPC) or to both national classification and IPC

### B. FIELDS SEARCHED

Minimum documentation searched (classification system followed by classification symbols)

IPC: H01Q, H01P, G01S

Documentation searched other than minimum documentation to the extent that such documents are included in the fields searched

Electronic data base consulted during the international search (name of data base and, where practicable, search terms used)

ENTXTC, WPABSC, CNTXT, CJFD: 波导, 垂直, 馈电, 馈入, 馈送, 水平; VEN, WPABS, IEEE: waveguide, feed+

### C. DOCUMENTS CONSIDERED TO BE RELEVANT

| Category* | Citation of document, with indication, where appropriate, of the relevant passages | Relevant to claim No. |
| --- | --- | --- |
| X | CN 112290213 A (SATPRO M&C TECH CO., LTD.) 29 January 2021 (2021-01-29) description, paragraphs 0001 and 0102-0106, and figures 10-11 | 1-18 |
| A | US 10082570 B1 (WAYMO LLC.) 25 September 2018 (2018-09-25) entire document | 1-18 |
| A | US 2004113857 A1 (Walter Gerhard) 17 June 2004 (2004-06-17) entire document | 1-18 |
| A | US 2018241133 A1 (WAYMO LLC.) 23 August 2018 (2018-08-23) entire document | 1-18 |
| A | US 2020363498 A1 (WAYMO LLC.) 19 November 2020 (2020-11-19) entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 October 2023** | **18 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT Information on patent family members | | | | International application No. PCT/CN2023/076197 | | | |
|---|---|---|---|---|---|---|---|

| Patent document cited in search report | | | Publication date (day/month/year) | Patent family member(s) | | | Publication date (day/month/year) |
|---|---|---|---|---|---|---|---|
| CN | 112290213 | A | 29 January 2021 | None | | | |
| US | 10082570 | B1 | 25 September 2018 | US | 2018364348 | A1 | 20 December 2018 |
| | | | | US | 10845476 | B2 | 24 November 2020 |
| | | | | US | 2021096238 | A1 | 01 April 2021 |
| | | | | US | 11619734 | B2 | 04 April 2023 |
| US | 2004113857 | A1 | 17 June 2004 | BR | 0111714 | A | 01 July 2003 |
| | | | | DE | 10028937 | A1 | 17 January 2002 |
| | | | | AU | 7966601 | A | 24 December 2001 |
| | | | | WO | 0197330 | A1 | 20 December 2001 |
| | | | | US | 6897824 | B2 | 24 May 2005 |
| US | 2018241133 | A1 | 23 August 2018 | US | 10193235 | B2 | 29 January 2019 |
| | | | | US | 9979094 | B1 | 22 May 2018 |
| US | 2020363498 | A1 | 19 November 2020 | US | 11047951 | B2 | 29 June 2021 |

Form PCT/ISA/210 (patent family annex) (July 2022)